# EUROPÄISCHE PATENTANMELDUNG

(11) **EP 4 838 198 A1**
(43) Veröffentlichungstag der Anmeldung: **11.11.2026**
(21) Anmeldenummer: 26174964.2
(22) Anmeldetag: 28.04.2026
(51) Int. Cl.: G01N 11/00, G01N 11/14

(54) **KOMBI-RHEOMETERVORRRICHTUNG ZUR ERMITTLUNG VON RHEOLOGISCHEN EIGENSCHAFTEN VON PROBEN, VERFAHREN ZUR KALIBRIERUNG EINER KOMBI-RHEOMETERVORRICHTUNG**

(30) Priorität: 06.05.2025 DE 102025117324
(71) Anmelder: Netzsch-Gerätebau GmbH, 95100 Selb (DE)
(72) Erfinder: Dunkel, Johannes, 95111 Rehau (DE); Rummel, Florian, 95100 Selb (DE); Szántó, Levente, 95028 Hof (DE); Küspert, Dr., Sabrina, 95100 Selb (DE); Taubmann, Dr., Rebekka, 95100 Selb (DE)

(57) **Zusammenfassung**

Die vorliegende Erfindung betrifft eine Kombi-Rheometervorrichtung (1) zur Ermittlung von rheologischen Eigenschaften von Proben (18) umfassend erste Mittel zur Durchführung von rotationsrheometrischen Messungen, zweite Mittel zur Durchführung von kapillarrheologischen Messungen, eine gemeinsam genutzte Antriebseinheit (11) und ein gemeinsam genutztes Steuermodul (8) mit Steuerungsprogramm (9), welche jeweils sowohl für die ersten Mittel als auch für die zweiten Mittel zum Zwecke der jeweiligen Messungen benutzerdefiniert bereitstellbar und nutzbar sind. Zudem wird ein Verfahren zur Kalibrierung einer Kombi-Rheometervorrichtung (1) vorgestellt.

## Beschreibung

### TECHNISCHES GEBIET DER ERFINDUNG

Die vorliegende Erfindung betrifft eine Kombi-Rheometervorrichtung zur Ermittlung von rheologischen Eigenschaften von Proben sowie ein Verfahren zur Kalibrierung einer Kombi-Rheometervorrichtung.

### HINTERGRUND DER ERFINDUNG

Für die rheologische Charakterisierung von Materialien stehen wissenschaftlichen Betrieben, aber auch produzierenden und verarbeitenden Industriebetrieben, zahlreiche Instrumente und Gerätschaften zur Verfügung, um mittels geeigneter Messverfahren, beispielsweise Scherrheologie-Verfahren, Dehnrheologie-Verfahren oder pvT-Verfahren (pvt = pressure, volume, temperature = Druck, Volumen, Temperatur), die gewünschten Informationen zu ermitteln. Als Beispiel für häufig eingesetzte Standardgeräte sind etwa bekannte Rotationsrheometer oder auch Hochdruck-Kapillarrheometer zu nennen.

Diese zuletzt genannten Gerätschaften können mitunter jeweils einen gewissen Platzbedarf benötigen, um die gewünschten Messungen durchführen zu können. Auch stellt jedes angeschaffte Gerät im Messlabor oder auch in vergleichbaren Einrichtungen in der Industrie, etwa in der Qualitätsabteilung oder dergleichen, eine gewisse Investitionen dar. Insofern besteht der Wunsch und ein gewisser Bedarf an rheologischen Geräten oder Instrumenten, welche zum einen platzsparend konzipiert sind und darüber hinaus hochfunktional ausgestaltet sind, sodass möglichst viele Aufgaben auf ihnen durchführbar sind.

### ZUSAMMENFASSUNG DER ERFINDUNG

Vor diesem Hintergrund liegt der vorliegenden Erfindung die Aufgabe zugrunde, eine Kombi-Rheometervorrichtung und ein zugehöriges Verfahren bereitzustellen, welche zumindest anteilig die zuvor genannten Nachteile überkommen.

Diese Aufgabe wird gelöst durch eine Kombi-Rheometervorrichtung mit den Merkmalen des Patentanspruchs 1 sowie durch ein Verfahren mit den Merkmalen des Patentanspruchs 17.

Dementsprechend ist eine Kombi-Rheometervorrichtung zur Ermittlung von rheologischen Eigenschaften von Proben vorgesehen, welche erste Mittel zur Durchführung von rotationsrheometrischen Messungen, zweite Mittel zur Durchführung von kapillarrheologischen Messungen, eine gemeinsam genutzte Antriebseinheit und ein gemeinsam genutztes Steuermodul mit Steuerungsprogramm umfasst. Die Antriebseinheit und das Steuermodul mit Steuerungsprogramm sind jeweils sowohl für die ersten Mittel als auch für die zweiten Mittel zum Zwecke der jeweiligen Messungen benutzerdefiniert bereitstellbar und nutzbar.

Des Weiteren ist ein Verfahren zur Kalibrierung einer erfindungsgemäßen Kombi-Rheometervorrichtung vorgesehen, welches umfasst: Bereitstellen und Aktivieren einer erfindungsgemäßen Kombi-Rheometervorrichtung, Durchführen von rotationsrheometrischen Messungen oder kapillarrheologischen Messungen, wobei jeweils keine Probe eingelegt ist, Ermittlung von Ergebnissen der Messungen, Hinterlegung der Ergebnisse der Messungen in dem Steuermodul mit Steuerprogramm, sodass diese Ergebnisse für nachfolgende Messungen mit Proben bereitstellbar sind.

Eine der Erfindung zugrunde liegende Idee besteht darin, ein Kombi-Gerät beziehungsweise eine geeignete Vorrichtung hervorzubringen, mit welcher unterschiedliche rheologische Messverfahren durchführbar sind, wobei eine platzsparende technische Konzeption zu favorisieren ist.

Die vorgestellte Erfindung bringt diese zuvor genannten Anforderungen mit Vorteil in der vorgestellten Kombi-Rheometervorrichtung zusammen, indem die Durchführung von sowohl rotationsrheometrischen Messungen als auch die Durchführung von kapillarrheologischen Messungen auf dem erfindungsgemäßen Gerät beziehungsweise auf der Vorrichtung möglich sind.

Dadurch, dass für jeweilige Messungen gemeinsam genutzte Komponenten vorgesehen sind, kann zudem eine platzsparende Konzeption mit Vorteil hervorgebracht werden. Dadurch, dass gemeinsam genutzte Komponenten vorgesehen sind, können zudem Fertigungskosten eingespart werden, sodass somit auch eine kostengünstige erfindungsgemäße Kombi-Rheometervorrichtung mit Vorteil hervorgebracht werden kann.

Die zuvor genannten Vorteile gelten, soweit übertragbar, auch für das vorgestellte Verfahren. Das Verfahren kann beispielsweise als Bestandteil des Steuerungsprogramms auf der Kombi-Rheometervorrichtung hinterlegt sein, sodass ein Wechsel zwischen den jeweiligen rheologischen Messverfahren leicht und benutzerfreundlich und mit Vorteil jederzeit durchgeführt werden kann.

Indem mittels des vorgestellten Verfahrens erste Informationen ohne jeweils eingelegte Proben ermittelbar sind, können auf vorteilhafte Weise Restreibungseffekte zwischen Stempel und Gefäßwandungen ermittelt werden, um diese Informationen dann für eigentliche Messungen an eingelegten Proben zu berücksichtigen.

Dies kann ebenso in Abhängigkeit von zum Beispiel einer Temperatur, insbesondere einer Umgebungstemperatur, im Falle von rotationsrheometrischen Messungen in Abhängigkeit einer Rotationsgeschwindigkeit der entsprechenden Komponenten und im Falle von kapillarrheologischen Messungen auch von einer vertikalen Geschwindigkeit der entsprechenden Komponenten erfolgen.

Gemäß eines Ausführungsbeispiels der Kombi-Rheometervorrichtung ist vorgesehen, dass die ersten und zweiten Mittel jeweils anteilig Komponenten umfassen, welche in einem jeweiligen ersten Modul für rotationsrheometrische Messungen und einem zweiten Modul für kapillarrheologische Messungen vorgesehen sind, welche jeweils ausgelegt sind, in der Kombi-Rheometervorrichtung platzierbar zu sein, wobei die Kombi-Rheometervorrichtung ausgelegt ist, entweder das erste oder das zweite Modul reversibel aufzunehmen, sodass je nach platziertem ersten oder zweiten Modul rotationsrheometrische Messungen oder kapillarrheologische Messungen an Proben durchführbar sind.

Auf diese Weise können je nach gewünschten durchzuführenden rheologischen Messungen entsprechende Komponenten in der Kombi-Rheometervorrichtung unmittelbar verfügbar platziert werden, um anschließend dann die gemeinsam genutzten Bestandteile mit dem jeweiligen Modul interagieren zu lassen.

Das jeweils andere Modul kann dabei an einem anderen Ort platziert werden, sodass der für die aktuell durchzuführenden Messungen benötigte Platz für die Kombi-Rheometervorrichtung sich auf die eingerichtete Variante beschränkt. Das jeweils inaktive Modul kann beispielsweise im ausgebauten Zustand zu Wartungszwecken oder Reinigungszwecken von einem Aufbauort der Kombi-Rheometervorrichtung entfernt werden. Auch kann ein jeweils aktuell nicht benutztes Modul außerhalb der Kombi-Rheometervorrichtung, beispielsweise sogar in einem anderen Raum oder dergleichen, gelagert werden, sodass sich der Platz für den aktiven Teil der Kombi-Rheometervorrichtung entsprechend reduzieren lässt.

Gemäß einer Weiterbildung der Kombi-Rheometervorrichtung ist vorgesehen, dass die gemeinsam genutzte Antriebseinheit und das gemeinsam genutzte Steuermodul mit Steuerungsprogramm jeweils fester Bestandteil der Kombi-Rheometervorrichtung sind, sodass diese Komponenten funktional jeweils dem ersten oder dem zweiten platzierten Modul bereitstellbar sind.

Eine feste Einbaulage beziehungsweise ein fester Bestandteil sind insbesondere deswegen vorteilhaft, da somit bei einem Wechsel der beiden Module eine Ausrichtung von Komponenten dieser Module besonders zuverlässig und somit benutzerfreundlich durchführbar ist.

Gemäß eines Ausführungsbeispiels der Kombi-Rheometervorrichtung ist vorgesehen, dass die Antriebseinheit eine Verbindungseinheit mit einer austauschbaren Stempeleinheit umfasst, welche ausgelegt ist, benutzerdefiniert Bewegungsimpulse der Antriebseinheit an die jeweiligen ersten oder zweiten Mittel zu übertragen, sodass aufgrund der Übertragung von benutzerdefinierten Bewegungsimpulsen jeweilige rheologische Messungen durchführbar sind, wobei die Bewegungsimpulse ausgewählt sind aus: rotierende Bewegungsimpulse, vertikale Bewegungsimpulse, horizontale Bewegungsimpulse, rotierende und gleichzeitig vertikale Bewegungsimpulse.

Die jeweiligen Mittel können somit definierter mit nötigen Bewegungsimpulsen für ihre jeweiligen rheologischen Messungen beziehungsweise bereitstellbaren rheologischen Messverfahren versorgt werden. Insbesondere die speziell aufgeführten Bewegungsimpulse lassen sich somit noch gezielter und mit hoher Präzision an die jeweiligen Mittel übertragen, sodass die durchgeführten rheologischen Messungen besonders zuverlässige Messergebnisse hervorbringen können. Aufgrund der austauschbaren Stempeleinheit ist es zudem mit Vorteil möglich, eine besonders flexibel einsetzbare Kombi-Rheometervorrichtung bereitzustellen. Mit anderen Worten kann die Kombi-Rheometervorrichtung aufgrund von verschiedenen einzusetzenden Stempeleinheiten besonders flexibel auf jeweils durchzuführende Messverfahren eingestellt werden.

Gemäß eines Ausführungsbeispiels der erfindungsgemäßen Kombi-Rheometervorrichtung ist vorgesehen, dass die Kombi-Rheometervorrichtung zumindest eine mit dem Steuermodul gekoppelte Sensoreinrichtung umfasst, welche ausgelegt ist, benutzerdefiniert für die Durchführung von rotationsrheometrischen Messungen oder für die Durchführung von kapillarrheologischen Messungen bereitstellbar und nutzbar zu sein.

Neben den über die Antriebseinheit ermittelbaren Messwerten können somit zusätzliche Messwerte erhoben werden, welche dann entsprechend in dem Steuermodul mit Steuerprogramm verarbeitet werden können. Über die Anzeige von jeweiligen ermittelten Werten hinaus sind somit auch die Anzeigen von zusammengefassten und berechneten Messergebnissen mit Vorteil möglich.

Gemäß einer Weiterbildung der Kombi-Rheometervorrichtung ist vorgesehen, dass die austauschbare Stempeleinheit ausgewählt ist aus: Stempeleinheit, welche ausgelegt ist, für rotationsrheometrische Messungen nutzbar zu sein, Stempeleinheit, welche ausgelegt ist, für kapillarrheologische Messungen nutzbar zu sein, Stempeleinheit, welche ausgelegt ist, für rotationsrheometrische Messungen oder kapillarrheologische Messungen nutzbar zu sein, Stempeleinheit mit austauschbarem Ringdichtungselement, welche ausgelegt ist, für kapillarrheologische Messungen nutzbar zu sein, Stempeleinheit mit austauschbarem Ringdichtungselement, welche ausgelegt ist, für rotationsrheometrische Messungen oder kapillarrheologische Messungen nutzbar zu sein.

Aufgrund der jeweiligen einsetzbaren Stempeleinheiten kann eine besonders flexibel einsetzbare Kombi-Rheometervorrichtung bereitgestellt werden. Die jeweiligen Stempeleinheiten können etwa in einem zur Kombi-Rheometervorrichtung zugehörigem Set bereitgestellt werden, aus welchem ein Anwender dann vor einer jeweiligen Messung die passende Stempeleinheit für die Kombi-Rheometervorrichtung auswählen kann. Stempeleinheiten mit jeweils austauschbarem Ringdichtungselement können helfen, jeweils auftretende Reibungen, welche während der Interaktion mit den jeweiligen Mitteln auftreten können, zu reduzieren, sodass mögliche störende Einflüsse dieser Reibungen bei Messvorgängen auf ein Minimum reduziert werden können. Die Stempeleinheit kann dabei jeweils eine obere Platte oder einen oberen Kegel oder jegliche weitere obere Geometrie umfassen. Insbesondere kann dabei auch eine Adaptervorrichtung für eine obere disponible Geometrieeinheit vorgesehen sein, der eine Aufnahme von beispielsweise Spritzvorrichtungsstempeln oder dergleichen ermöglicht. Eine Aufnahme von Spritzen-Stempeln kann auch in speziell für diese Zwecke vorgesehenen Halterungen erfolgen. Es ist zudem vorstellbar, dass die jeweilige Stempeleinheit so auszulegen ist, sodass ein restloses Entleeren und somit volumenverlustfreie Messvorgänge bewirkbar sein können.

Gemäß eines anderen Ausführungsbeispiels der Kombi-Rheometervorrichtung ist vorgesehen, dass die austauschbare Stempeleinheit eine benutzerdefiniert einstellbare Einspannvorrichtung umfasst, welche ausgelegt ist, einen Endbereich eines Spritzgeräts einzuspannen, sodass mittels der übertragenen Bewegungsimpulse ein Kolben des Spritzgeräts benutzerdefiniert bewegbar ist, sodass kapillarrheologische Messungen durchführbar sind.

Solch eine einstellbare Einspannvorrichtung kann somit ermöglichen, verschiedenste Größen von Endbereichen von unterschiedlichsten Spritzgeräten, etwa in Form von Injektionsspritzen (beispielsweise in Form von Insulinspritzen) oder dergleichen, einzuspannen, sodass dann Proben, welche innerhalb der jeweiligen Spritzgeräte vorhanden sind, mit der Kombi-Rheometervorrichtung schnell und mit Vorteil untersucht werden können. Mit anderen Worten kann ein eingespannter Endbereich eines Spritzgeräts so vorgesehen sein, sodass anschließend ein Kolben des eingespannten Spritzgeräts mittels der Antriebseinheit definiert nach unten bewegt werden kann, sodass rheologische Messungen durchführbar sind.

Gemäß eines weiteren Ausführungsbeispiels der Kombi-Rheometervorrichtung ist vorgesehen, dass das zweite Modul für kapillarrheologische Messungen zumindest ein Gefäß zur Aufnahme einer Probe umfasst, wobei an einem Endbereich eines jeweiligen Gefäßes zumindest eine austauschbare Düsenvorrichtung platzierbar ist, sodass mittels der gemeinsam genutzten Antriebseinheit eine in dem jeweiligen Gefäß eingelegte Probe zwecks kapillarrheologischen Messungen durch die zumindest eine Düsenvorrichtung bewegbar ist.

Diese modulartige Ausführungsvariante ermöglicht eine Vielzahl von Messanordnungen, insbesondere aufgrund der austauschbaren Düsenvorrichtungen, sodass eine höchst flexibel einsetzbare Kombi-Rheometervorrichtung hervorgebracht werden kann.

Da auch mehrere Gefäße vorgesehen werden können, in welche jeweils die Antriebseinheit entsprechend ihre Bewegungsimpulse übertragen kann, etwa mittels der Verbindungseinheit mit austauschbaren Stempeleinheit, kann zudem eine besonders benutzerfreundliche Kombi-Rheometervorrichtung bereitgestellt werden.

Jeweilige Gefäße können vor den eigentlichen Messungen mit jeweiligen Proben befüllt werden, sodass anschließend nacheinander mittels der Antriebseinheit jeweilige Proben in den jeweiligen Gefäßen durch die zumindest eine Düsenvorrichtung bewegt werden können.

Jeweilige Auswertungen von erfassten Zusammenhängen zwischen Verhalten der Antriebseinheit und aufzuwendenden Kräften können dann im Steuermodul mit Steuerprogramm für die kapillarrheologischen Messungen verarbeitet werden. Optional können dabei auch Werte von eventuell vorhandenen Sensoreinrichtungen berücksichtigt werden.

Gemäß eines weiteren Ausführungsbeispiels der Kombi-Rheometervorrichtung ist vorgesehen, dass das zweite Modul für kapillarrheologische Messungen zumindest ein Gefäß umfasst und wobei jeweilige Innenwandungen des zumindest einen Gefäßes mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

Auf diese Weise können eventuell als störend zu erachtende Reibungsvorgänge zwischen einer in das jeweilige Gefäß eingeführte Stempeleinheit zur Bewegung der eingelegten Probe und Gefäßinnenwandung des jeweiligen Gefäßes minimiert werden, sodass Messvorgänge auf vorteilhafte Weise noch präziser durchgeführt werden können. Unter einem Beschichtungsmaterial mit benutzerdefinierten Reibeigenschaften kann in diesem Zusammenhang jegliches Material verstanden werden, welches aufgrund seiner bestimmten, insbesondere messbaren, Reibeigenschaften bewusst vorgesehen wird, sodass sich ein gewünschter technischer Effekt bereitstellen lässt. Wenn Beschichtungen vorgesehen beziehungsweise ausgewählt werden, so kann dies entsprechend applikationsabhängig vorgesehen werden.

Gemäß eines anderen Ausführungsbeispiels der Kombi-Rheometervorrichtung ist vorgesehen, dass das zweite Modul für kapillarrheologische Messungen zumindest eine mit dem Steuermodul gekoppelte optische Messeinrichtung umfasst, welche ausgelegt ist, austretende Proben aus einem Teilbereich des zweiten Moduls zu erfassen, wobei die optische Messeinrichtung ausgewählt ist aus: Laserbasierte optische Messeinrichtung, kamerabasierte optische Messeinrichtung.

Die somit mit Vorteil zu erweiternde Kombi-Rheometervorrichtung kann optional Messungen einer Strangaufweitung (auch als sogenannte Swell-Messung bekannt) oder dergleichen bereitstellen, sodass noch umfangreichere kapillarrheologische Messungen durchgeführt werden können. Entsprechend kann in diesem Zusammenhang das Steuermodul mit Steuerungsprogramm für diese Zwecke ausgelegt sein, sodass unter Berücksichtigung aller Messwerte detaillierte Informationen über die erhaltenen Messergebnisse bereitgestellt werden können.

Gemäß eines weiteren Ausführungsbeispiels der Kombi-Rheometervorrichtung ist vorgesehen, dass das zweite Modul für kapillarrheologische Messungen einen Behälter umfasst, welcher benutzerdefiniert mit einem Gasgemisch oder einer Flüssigkeit oder einem Festkörper, insbesondere einem Schwammkörper, mit aufgenommenem Gasgemisch oder einem Festkörper, insbesondere einem Schwammkörper, mit aufgenommener Flüssigkeit befüllt ist und welcher ausgelegt ist, austretende Proben aufzunehmen.

So ist es möglich, dass Proben beziehungsweise deren Auslass nach Verlassen einer entsprechenden Komponente, beispielsweise in Form eines Gefäßes oder dergleichen, des zweiten Moduls, etwa durch eine Düsenvorrichtung oder Kanüle oder dergleichen, definiert in den Behälter mit einem Gasgemisch, welches beispielsweise schlicht im Wesentlichen einer Zusammensetzung der umgebenden Raumluft entspricht, überführt werden können, wobei ein dabei eintretendes Verhalten beobachtet werden kann. Diese Informationen können anschließend für Berechnungsvorgänge der Messergebnisse verwendet werden.

Optional kann auch eine bestimmte Gaszusammensetzung vorgesehen sein, etwa um eine Grenzfläche Probe-Gas bei einem Austritt beziehungsweise Auslass der Probe aus einem Teilbereich des zweiten Moduls zu verändern und so zum Beispiel Grenzflächenspannungen zu reduzieren und somit vorrangig Bulk-Eigenschaften der Probe zu untersuchen beziehungsweise weitere Messergebnisse für die Ermittlung von rheologischen Informationen zu erhalten. Mit gleicher Motivation kann der Auslass optional in ein Volumen mit einer Flüssigkeit oder in ein mit Gas oder Flüssigkeit gefüllten Festkörper, wie einem feuchten Schwamm oder dergleichen, erfolgen.

Gemäß eines anderen Ausführungsbeispiels der Kombi-Rheometervorrichtung ist vorgesehen, dass die zumindest eine Düsenvorrichtung ausgewählt ist aus: Düsenvorrichtung (19) mit einer Öffnung mit einem Durchmesser von mindestens 10 µm; Düsenvorrichtung mit einer Öffnung zwischen 0,01 und 2 mm; Injektionsnadel mit einem Innendurchmesser zwischen 0,01 und 2 mm; Injektionsnadel mit einem Innendurchmesser zwischen 0,01 und 2 mm und mit einer Länge zwischen 1 und 23 mm; Injektionsnadel einem Innendurchmesser zwischen 0,01 und 2 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften; Injektionsnadel mit einem Innendurchmesser von mindestens 10 µm, insbesondere zwischen 0,01 und 2 mm und mit einer Länge von mindestens 10 µm, insbesondere zwischen 1 und 23 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

Auf diese Weise können Messungen durchgeführt werden, welche einen hohen Praxisbezug aufweisen, sodass ein unmittelbarer Nutzen der erfindungsgemäßen Kombi-Rheometervorrichtung mit Vorteil erreicht werden kann. Beschichtete Innenwandungen können möglicherweise als störend empfundene Reibungen zumindest reduzieren, sodass mittels der durchgeführten Messungen noch gezielter vorhandene Materialeigenschaften der eingelegten Proben ermittelt können.

Gemäß eines weiteren Ausführungsbeispiels der Kombi-Rheometervorrichtung ist vorgesehen, dass die zumindest eine mit dem Steuermodul gekoppelte Sensoreinrichtung ausgewählt ist aus: Sensoreinrichtung zur Messung von Kräften; Sensorvorrichtung zur Messung von Drücken; Sensorvorrichtung zur Messung von Kräften und zur Messung von Drücken.

Anstatt nur Betriebsparameter von der Antriebseinheit zu erfassen und zu verarbeiten können mittels der vorgesehenen speziellen Sensorvorrichtung für einen Anwender unmittelbar auslesbare Parameter erhoben werden, sodass eine bedienerfreundlichere Kombi-Rheometervorrichtung bereitgestellt werden kann.

Gemäß eines anderen Ausführungsbeispiels der Kombi-Rheometervorrichtung ist vorgesehen, dass die jeweiligen austauschbaren Stempeleinheiten außen zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

Beschichtete Außenwandungen können möglicherweise als störend empfundene Reibungen zumindest reduzieren, sodass Messungen noch besser Materialeigenschaften der eingelegten Proben ermitteln können. Mit anderen Worten können die austauschbaren Stempeleinheiten an entsprechenden Reibungsflächen zumindest anteilig beschichtet vorgesehen sein, sodass etwa ein Benetzungsverhalten mit Probenmaterialien verändert werden kann oder um allgemein Reibungen an Kontaktbereichen zwischen jeweiligen Stempeleinheiten und jeweiligen Gefäßinnenwandungen zu minimieren.

Gemäß eines weiteren Ausführungsbeispiels der Kombi-Rheometervorrichtung ist vorgesehen, dass die Kombi-Rheometervorrichtung zumindest eine Reinigungsvorrichtung umfasst, welche ausgelegt ist, zumindest anteilig die Verbindungseinheit mit der austauschbaren Stempeleinheit zu reinigen.

Solch eine Reinigungsvorrichtung kann somit mit Vorteil eingesetzt werden, um eine bedienerfreundliche Kombi-Rheometervorrichtung zu begünstigen. Anstatt einer manuellen Reinigung kann mittels der Reinigungsvorrichtung eine vorteilhafte zumindest anteilig automatisierte Reinigung von Verbindungseinheit mit der austauschbaren Stempeleinheit bewirkt werden. Sind etwa mehrere Gefäße in der Kombi-Rheometervorrichtung vorgesehen, in welchen unterschiedliches Probenmaterial bereits für anstehende Messungen vorgehalten wird, kann mittels der Reinigungsvorrichtung die Verbindungseinheit mit der austauschbaren Stempeleinheit zwischen den einzelnen Messungen jeweils gereinigt werden, sodass gleiche Bedingungen vor jeder Messung hergestellt werden können, insbesondere kann somit eine Verunreinigung von Probenmaterial zuverlässig verhindert werden.

Gemäß eines anderen Ausführungsbeispiels der Kombi-Rheometervorrichtung ist vorgesehen, dass das Steuermodul mit Steuerprogramm zumindest ein Kalibrierverfahren umfasst, sodass die Kombi-Rheometervorrichtung vor den Messungen kalibrierbar ist, sodass anschließend rotationsrheometrische Messungen oder kapillarrheologische Messungen durchführbar sind.

Auf diese Weise kann beispielsweise eine Restreibung zwischen jeweiligen Stempeleinheiten und jeweiligen Gefäßinnenwandung vor den Messungen ermittelt werden, sodass diese Information für spätere Auswertevorgänge von rheologischen Messungen mit Vorteil verwendet werden können.

Auch sind Kalibrierverfahren vorstellbar, die sehr gut bekanntes Probenmaterial berücksichtigen, sodass sich einstellende Restreibungen im Zusammenhang mit Stempeleinheiten, Gefäßinnenwandungen und flüssigem Referenzprobenmaterial, etwa in Form einer bestimmten und hinlänglich bekannten Flüssigkeit, ermittelt werden können, sodass diese Information für spätere Auswertevorgänge von rheologischen Messungen mit Vorteil verwendet werden können.

Diese Restreibungen können dabei in bestimmten Verfahren in Abhängigkeit von zum Beispiel Temperatur, Rotationsgeschwindigkeit der Antriebseinheit und vertikaler Geschwindigkeit der Antriebseinheit kalibriert werden.

Ein jeweiliges Kalibrierverfahren kann etwa diese ermittelten Werte dann in dem Steuermodul mit Steuerprogramm derart hinterlegen, sodass diese Werte bei den eigentlichen rheologischen Messungen von Proben subtrahiert beziehungsweise allgemein berücksichtigt werden können. Optional kann auch ein Kalibrierverfahren vorgesehen sein, welches Kalibrierungen ohne eingelegtes Probenmaterial vorsehen.

Alternativ kann erst ein Kalibrieren unter Berücksichtigung einer jeweiligen Probe oder eines bekannten Probenmaterials einer Kalibrierprobe oder dergleichen erfolgen und anschließend dann ein Kalibrieren ohne eingelegtes Probenmaterial, wobei das Verfahren entsprechend für diese Vorgänge jeweils anzupassen ist. Alle erhobenen Werte können anschließend derart hinterlegt werden, sodass benutzerdefiniert eine Auswahl von einer Art und Weise einer Kalibrierung ausgewählt werden kann.

Gemäß eines anderen Ausführungsbeispiels des Verfahrens zur Kalibrierung einer erfindungsgemäßen Kombi-Rheometervorrichtung, umfasst solch ein Verfahren weiterhin: Bereitstellen einer Probe, welche eine definierte Menge eines rheologisch bekannten Probenmaterials umfasst, Einlegen der Probe in die erfindungsgemäße Kombi-Rheometervorrichtung, Ermittlung von Ergebnissen der Messungen, Hinterlegung der Ergebnisse der Messungen in dem Steuermodul mit Steuerprogramm, sodass diese Ergebnisse für nachfolgende Messungen mit Proben bereitstellbar sind.

Indem mittels des vorgestellten Verfahrens in dieser Variante weitere Informationen mit jeweils eingelegten Proben, welche jeweils eine definierte Menge eines rheologisch bekannten Probenmaterials umfassen, ermittelt werden, können auf vorteilhafte Weise Restreibungseffekte zwischen Stempel und Gefäßwandungen und dem bekannten Probenmaterial, insbesondere einem im Wesentlichen flüssig ausgeprägtem Probenmaterial, ermittelt werden, um diese Informationen dann für eigentliche Messungen an eingelegten Proben zu berücksichtigen.

Mit anderen Worten kann die Restreibung in Bezug auf einen Zusammenhang zwischen Stempel-Gefäßwand-Fluid ermittelt werden, sodass diese erhobenen Messwerte für das erfindungsgemäße Kalibrierverfahren genutzt werden kann.

Dies kann ebenso in Abhängigkeit von zum Beispiel einer Temperatur, insbesondere einer Umgebungstemperatur, im Falle von rotationsrheometrischen Messungen in Abhängigkeit einer Rotationsgeschwindigkeit von entsprechenden Komponenten und im Falle von kapillarrheologischen Messungen auch von einer vertikalen Geschwindigkeit von entsprechenden Komponenten erfolgen.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Seitenansicht einer Kombi-Rheometervorrichtung nach einem Ausführungsbeispiel der vorliegenden Erfindung;
- Fig. 2: eine schematische Detailansicht eines ersten Moduls für rotationsrheometrische Messungen einer Kombi-Rheometervorrichtung nach einem Ausführungsbeispiel der vorliegenden Erfindung;
- Fig. 3: eine schematische Detailansicht eines zweiten Moduls für kapillarrheologische Messungen einer Kombi-Rheometervorrichtung nach einem Ausführungsbeispiel der vorliegenden Erfindung;
- Fig. 4: eine schematische Detailansicht eines weiteren zweiten Moduls für kapillarrheologische Messungen einer Kombi-Rheometervorrichtung nach einem Ausführungsbeispiel der vorliegenden Erfindung;
- Fig. 5: eine schematische Perspektivansicht eines weiteren zweiten Moduls für kapillarrheologische Messungen einer Kombi-Rheometervorrichtung nach einem Ausführungsbeispiel der vorliegenden Erfindung;
- Fig. 6a - c: schematische Detailansichten von Verbindungseinheiten mit austauschbaren Stempeleinheiten einer Kombi-Rheometervorrichtung nach Ausführungsbeispielen der vorliegenden Erfindung;
- Fig. 7: ein schematisches Flussdiagramm von einem Verfahren zur Kalibrierung einer Kombi-Rheometervorrichtung nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

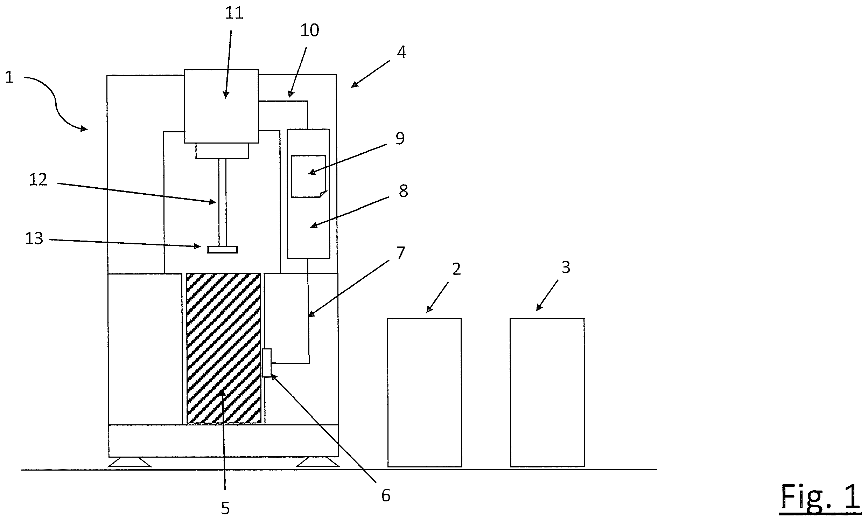

Fig. 1 zeigt eine schematische Seitenansicht einer Kombi-Rheometervorrichtung 1 nach einem Ausführungsbeispiel der vorliegenden Erfindung. Die dargestellte Kombi-Rheometervorrichtung 1 zur Ermittlung von rheologischen Eigenschaften von Proben umfasst dabei erste Mittel zur Durchführung von rotationsrheometrischen Messungen und zweite Mittel zur Durchführung von kapillarrheologischen Messungen, welche jeweils in einem ersten Modul 2 für rotationsrheometrische Messungen und einem zweiten Modul 3 für kapillarrheologische Messungen dargestellt sind.

Die beiden Module 2, 3 sind im ausgebauten Zustand neben einem Grundkörper 4 der Kombi-Rheometervorrichtung 1 dargestellt. Die beiden Module 2, 3 sind jeweils ausgelegt, in der Kombi-Rheometervorrichtung 1 platzierbar zu sein, wobei die Kombi-Rheometervorrichtung 1 entsprechend ausgelegt ist, entweder das erste oder das zweite Modul 2, 3 reversibel aufzunehmen, sodass je nach platziertem ersten oder zweiten Modul 2, 3 rotationsrheometrische Messungen oder kapillarrheologische Messungen an Proben durchführbar sind.

In dem Grundkörper 4 der Kombi-Rheometervorrichtung 1 ist in Figur 1 eine schraffierte Fläche als Platzhalter 5 für die beiden Module 2, 3 dargestellt. Die beiden Module 2, 3 können jeweils einzeln und je nach gewünschter Funktion der Kombi-Rheometervorrichtung 1 in diesem Platzhalter 5 des Grundkörpers 4 eingepasst beziehungsweise funktional so gekoppelt werden, sodass je nach platziertem ersten oder zweiten Modul 2, 3 rotationsrheometrische Messungen oder kapillarrheologische Messungen an Proben durchführbar sind.

Bezogen auf die Bildebene ist auf der rechten Seite des Grundkörpers 4 eine Kopplungseinheit 6 dargestellt, welche ausgelegt ist, entweder das erste oder das zweite Modul 2, 3 über eine erste Verbindungsleitung 7 mit einem Steuerungsmodul 8 mit Steuerungsprogramm 9 der Kombi-Rheometervorrichtung 1 zu koppeln. Auch kann diese Kopplungseinheit 6 ausgelegt sein, das erste oder das zweite Modul 2, 3 entsprechend mit Energie oder dergleichen zu versorgen, welche entsprechend von der für diese Zwecke mit einer Energiequelle gekoppeltem Grundkörper 4 der Kombi-Rheometervorrichtung 1 bereitgestellt werden kann.

Das Steuerungsmodul 8 mit Steuerungsprogramm 9 ist wiederum über eine zweite Verbindungsleitung 10 mit einer Antriebseinheit 11 der Kombi-Rheometervorrichtung 1 dargestellt. Sowohl die Antriebseinheit 11 als auch das Steuerungsmodul 8 mit Steuerungsprogramm 9 sind ausgelegt, gemeinsam von dem ersten oder zweiten Modul 2, 3 genutzt zu werden. Mit anderen Worten kann je nach platziertem Modul 2, 3 sowohl die Antriebseinheit 11 als auch das Steuerungsmodul 8 mit Steuerungsprogramm 9 entweder mit dem ersten Modul 2 zur Durchführung von rotationsrheometrische Messungen oder mit dem zweiten Modul 3 zur Durchführung von kapillarrheologische Messungen genutzt werden, wobei beide gemeinsam genutzten Komponenten jeweils für diese Zwecke ausgelegt sind. Die Antriebseinheit 11 kann beispielsweise eine entsprechende Getriebeeinheit umfassen, um somit benutzerdefiniert für die beiden Module 2, 3 zum Zwecke der jeweiligen Messvorgänge einstellbar zu sein.

Beispielsweise kann ein Anwender mittels einfachster Einstellungsvorgänge diese beiden Komponenten für die anstehenden Messungen einrichten beziehungsweise allgemein aktivieren. Alternativ sind automatische Erkennungsroutinen vorstellbar, sodass bereits während eines Platziervorgangs des entsprechenden Moduls 2, 3 die Komponenten automatisch via Signalübertragung oder auch aufgrund von mechanisch bewirkten Einstellvorgängen das platzierte Modul 2, 3, erkennen und entsprechende Einstellungen vornehmen. Solche Einstellungen können entweder ausschließlich bei den beiden gemeinsam genutzten Komponenten vollzogen werden oder alternativ auch in dem jeweiligen Modul 2, 3.

Unterhalb der Antriebseinheit 11 (bezogen auf die Bildebene) ist eine Verbindungseinheit 12 mit einer austauschbaren Stempeleinheit 13 dargestellt.

Diese Verbindungseinheit 12 mit der austauschbaren Stempeleinheit 13 ist dabei ausgelegt, benutzerdefiniert Bewegungsimpulse der Antriebseinheit 11 an die jeweiligen ersten oder zweiten Mittel in Form der beiden Module 2, 3 zu übertragen, sodass aufgrund der Übertragung von benutzerdefinierten Bewegungsimpulsen jeweilige rheologische Messungen durchführbar sind.

Die zu übertragenden Bewegungsimpulse sind dabei auswählbar aus den folgenden Möglichkeiten: rotierende Bewegungsimpulse, vertikale Bewegungsimpulse, horizontale Bewegungsimpulse, rotierende und gleichzeitig vertikale Bewegungsimpulse.

So ist beispielsweise vorstellbar, dass bei einem platzierten ersten Modul 2 zur Durchführung von rotationsrheometrische Messungen rotierende und gleichzeitig vertikale Bewegungsimpulse übertragbar sind und bei einem platzierten zweiten Modul 3 beispielsweise nur vertikale oder horizontale Bewegungsimpulse übertragbar sind. Die Antriebseinheit 11 kann hierfür nicht näher dargestellte Getriebevorrichtungen oder dergleichen umfassen, sodass etwa Bewegungen einer elektrischen Motoreinheit oder dergleichen in der Antriebseinheit 11 in jeweils benötigte Bewegungsimpulse umwandelbar sind. So ist etwa vorstellbar, dass solch eine elektrische Motoreinheit in Form einer Schrittmotoreinheit, insbesondere als Synchronmotoreinheit oder als Reluktanzmotoreinheit, ausgebildet ist. Auch alternative Antriebseinheiten sind denkbar.

So kann die Antriebseinheit 11 beispielsweise auch eine Perfusionspumpe umfassen, um etwa vertikale Bewegungen zu ermöglichen und somit die Verbindungseinheit 12 mit der austauschbaren Stempeleinheit 13 nach unten oder oben zu bewegen. Allgemein kann bei vertikalen Bewegungen eine aufzuwendende Kraft gemessen werden, um über diese ermittelten Parameter dann rheologische Messungen zu ermitteln und bereitzustellen. Hierzu kann beispielsweise zumindest eine Kraftmessvorrichtung, welche auch allgemein als Sensoreinheit oder Kraftsensoreinheit bezeichnet werden kann, eingesetzt beziehungsweise mit Vorteil verwendet werden. Basierend auf solchen Kraftmessungen können etwa auftretende Schubspannungen oder dergleichen ermittelt oder berechnet werden.

So kann also die Antriebseinheit 11 in jeglicher Ausführung für Rotationsbeziehungsweise Oszillationsbewegungen genutzt werden, um einen Stempel der austauschbaren Stempeleinheit 13 optional zu oszillieren oder zu rotieren. Auch ist in diesem Zusammenhang vorstellbar, dass somit durch eine so realisierte Bewegung bei einer benutzerdefinierten Geschwindigkeit eine Restreibung zwischen austauschbare Stempeleinheit 13 beziehungsweise einem zugehörigen Stempel dieser austauschbaren Stempeleinheit 13 und einer Gefäßwand reduziert werden kann. Dies kann etwa durch Nutzen eines Optimums in Art einer Stribeck-Kurve oder dergleichen erfolgen, die für die jeweilige Paarung von Stempel und Gefäßwand und Probe, insbesondere einer im Wesentlichen flüssigen Probe beziehungsweise einem entsprechenden Fluid, charakteristisch sein kann.

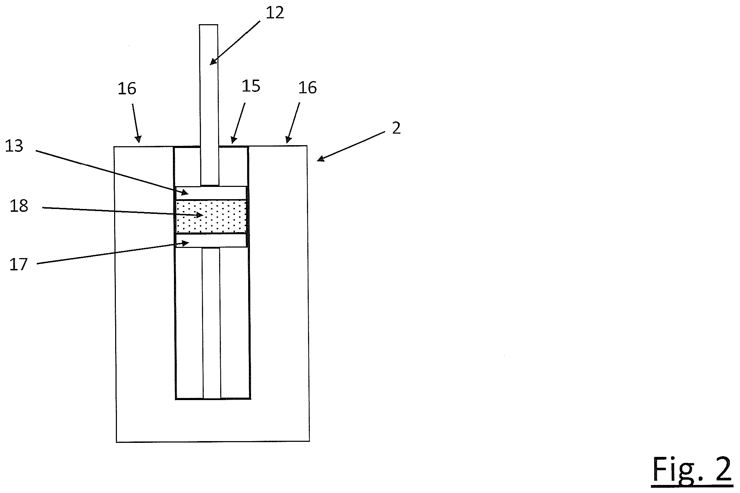

Fig. 2 zeigt eine schematische Detailansicht eines ersten Moduls 2 für rotationsrheometrische Messungen einer Kombi-Rheometervorrichtung 1 nach einem Ausführungsbeispiel der vorliegenden Erfindung.

Es handelt sich dabei um ein erstes Modul 2 wie es etwa in der in Figur 1 dargestellten Kombi-Rheometervorrichtung 1 platzierbar ist, sodass anschließend rotationsrheometrische Messungen durchgeführt werden können. In dieser Schnittansicht ist mittig ein Gefäß 14 dargestellt, welches nach oben hin (bezogen auf die Bildebene) eine Öffnung 15 aufweist, sodass es nach oben offen ist, wobei sich in dieser speziellen Ausführungsform diese Öffnung 15 im Wesentlichen in eine sie umgebende obere Begrenzungsfläche 16 des dargestellten ersten Moduls 2 einfügt. Alternativ ist vorstellbar, dass das Gefäß 14 derart platziert wird, sodass diese Öffnung 15 (bezogen auf die Bildebene) oberhalb diese umgebenden oberen Begrenzungsfläche 16 des dargestellten ersten Moduls 2 liegt. Mit anderen Worten kann das Gefäß 14 auch zumindest anteilig aus dem ersten Modul 2 hervorragen, sodass etwa mit Vorteil ein Entnahmevorgang oder dergleichen für einen Anwender der erfindungsgemäßen Kombi-Rheometervorrichtung 1 leichter durchführbar ist.

Das Gefäß 14 weist im Wesentlichen eine zylindrische Form auf und ist mit einer beweglich gelagerten Bodenplatte 17 dargestellt, auf welcher eine platzierte Probe 18 zu erkennen ist. Bezogen auf die Bildebene ist auf der Probe 18 aufgesetzt eine Verbindungseinheit 12 mit austauschbarer Stempeleinheit 13 von der Kombi-Rheometervorrichtung 1 dargestellt, sodass die Probe 18 beziehungsweise das sie darstellende Probematerial zwischen der austauschbaren Stempeleinheit 13 und der Bodenplatte 17 eingespannt vorgesehen werden kann, sodass rotationsrheometrische Messungen durchgeführt werden können.

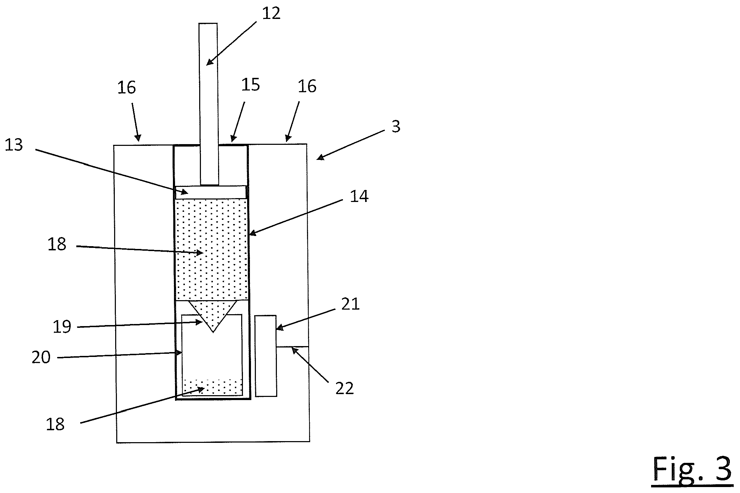

Fig. 3 zeigt eine schematische Detailansicht eines zweiten Moduls 3 für kapillarrheologische Messungen einer Kombi-Rheometervorrichtung 1 nach einem Ausführungsbeispiel der vorliegenden Erfindung.

Es handelt sich dabei um ein zweites Modul 3 wie es etwa in der in Figur 1 dargestellten Kombi-Rheometervorrichtung 1 platzierbar ist, sodass anschließend kapillarrheologischen Messungen durchgeführt werden können. In dieser Schnittansicht ist mittig ein Gefäß 14 dargestellt, welches nach oben hin (bezogen auf die Bildebene) eine Öffnung 15 aufweist, sodass es nach oben offen ist, wobei sich in dieser speziellen Ausführungsform diese Öffnung 15 im Wesentlichen in eine sie umgebende obere Begrenzungsfläche 16 des dargestellten zweiten Moduls 3 einfügt.

Das Gefäß 14 weist im Wesentlichen eine zylindrische Form auf und ist mit einer austauschbaren Düsenvorrichtung 19 dargestellt, welche sich (bezogen auf die Bildebene) im Wesentlichen im unteren Drittel an dem Gefäß 14 angeordnet befindet, sodass eine in dem Gefäß 14 platzierte Probe 18 durch diese Düsenvorrichtung 19 hindurch befördert werden kann. Oberhalb der Probe 18 (bezogen auf die Bildebene) ist auf der Probe 18 aufgesetzt eine Verbindungseinheit 12 mit austauschbarer Stempeleinheit 13 von der Kombi-Rheometervorrichtung 1 dargestellt, sodass sich die Probe 18 beziehungsweise das sie darstellende Probematerial zwischen der austauschbaren Stempeleinheit 13 und der Düsenvorrichtung 19 befindet, sodass im aktivierten Zustand der nicht näher dargestellten Antriebseinheit 11 kapillarrheologischen Messungen durchgeführt werden können, indem die Probe 18 durch die Düsenvorrichtung 19 definiert hinausgedrückt wird.

Die Düsenvorrichtung 19 kann dabei beispielsweise ausgewählt sein aus folgenden Ausführungsbeispielen: Düsenvorrichtung 19 mit einer Öffnung mit einem Durchmesser von mindestens 10 µm; Düsenvorrichtung mit einer Öffnung zwischen 0,01 und 2 mm; Injektionsnadel mit einem Innendurchmesser zwischen 0,01 und 2 mm; Injektionsnadel mit einem Innendurchmesser von mindestens 10 µm, insbesondere zwischen 0,01 und 2 mm und mit einer Länge von mindestens 10 µm, insbesondere zwischen 1 und 23 mm; Injektionsnadel einem Innendurchmesser zwischen 0,01 und 2 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften. ; Injektionsnadel mit einem Innendurchmesser zwischen 0,01 und 2 mm und mit einer Länge zwischen 1 und 23 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften. Hydrophiles Beschichtungsmaterial, hydrophobes Beschichtungsmaterial, verschleißarmes Beschichtungsmaterial, Beschichtungsmaterial mit benutzerdefinierten Reibeigenschaften.

In weiteren nicht näher dargestellten Ausführungsformen ist vorstellbar, dass ein Düsendesign jeglicher Düsenvorrichtung hinsichtlich zumindest einer Materialauswahl und einer Formgebung flexibel je nach Anwendungsfalls zu gestalten sein kann. Insbesondere bei sehr geringviskosen Proben und/oder bei Proben, die bei relativ geringen Scherraten gemessen werden sollen, sollte es möglich sein, die Düsenlänge auf beispielsweise 100 mm oder optional deutlich länger zu erweitern. Vorstellbar sind beispielsweise Glaskapillaren oder geeignete Schläuche (zum Beispiel mit einer gewissen Materialverträglichkeit, Präzision und so weiter), welche verwendet werden können. Optional kann die Düsenvorrichtung ähnlich einer Säule mehrere Meter lang und zum Beispiel in einem aufgewickelten Zustand bereitstellbar sein. Optional ist zudem vorstellbar, dass auch Null-Düsen oder dergleichen vorgesehen werden können. Ebenso ist vorstellbar, dass allgemein jegliche Düsenvorrichtungen mit Vorteil einsetzbar sind, welche sich im Zusammenhang mit einer Hochdruck-Kapillarrheometer-Vorrichtung verwenden lassen.

In einer nicht näher dargestellten Ausführungsvariante ist zudem vorstellbar, dass mehr als eine Düsenvorrichtung 19 vorgesehen ist. Beispielsweise weisen diese unterschiedlichen nicht näher dargestellten Düsenvorrichtungen dann sich unterscheidende Geometrien etwa in Bezug auf Ausgangsöffnungen auf und sind beispielsweise übereinander angeordnet, sodass je nach Versuchsaufbau und vorangegangenem Kalibrierverfahren weitere Untersuchungsmöglichkeiten bereitstellbar sind.

Unterhalb der dargestellten Düsenvorrichtung 19 in Figur 3 ist ein Behälter 20 dargestellt, in welchem aus der Düsenvorrichtung 19 ausgetretenes Probenmaterial der Probe 18 aufgefangen werden kann, was im Bodenbereich des Behälters 20 angedeutet zu erkennen ist.

Dieser Behälter 20 ist dabei in sich geschlossen dargestellt, sodass er benutzerdefiniert mit einem Gasgemisch oder einer Flüssigkeit oder einem Festkörper, insbesondere einem Schwammkörper, mit aufgenommenem Gasgemisch oder einem Festkörper, insbesondere einem Schwammkörper, mit aufgenommener Flüssigkeit befüllbar ist.

Beispielsweise kann der Behälter 20 in einer einfachen Variante mit Raumluft gefüllt sein. Es ist jedoch vorstellbar, dass der Behälter 20 auch mit einem gesondert für diese Zwecke angemischtem Gasgemisch befüllt ist, welches sich vor allem dadurch auszeichnet, dass es sich überwiegend, bezogen auf die Volumenanteile, eben nicht um Raumluft handelt.

Die Geschlossenheit des Behälters 20 ist in Figur 3 angedeutet zu erkennen, da lediglich die Düsenvorrichtung 19 unmittelbar in einen Innenbereich des Behälters 20 hineinragt, wobei somit lediglich das Probenmaterial der Probe 18 in diesen Innenbereich von außen eindringen kann.

Insofern kann optional eine bestimmte Gaszusammensetzung vorgesehen sein, etwa um eine Grenzfläche Probe-Gas bei einem Austritt beziehungsweise Auslass der Probe 18 aus einem Teilbereich des zweiten Moduls 3 zu verändern und so zum Beispiel Grenzflächenspannungen zu reduzieren und somit vorrangig Bulk-Eigenschaften der Probe 18 zu untersuchen beziehungsweise weitere Messergebnisse für die Ermittlung von rheologischen Informationen zu erhalten.

Mit gleicher Motivation kann der Auslass optional in ein Volumen mit einer Flüssigkeit oder in ein mit Gas oder Flüssigkeit gefüllten Festkörper, wie einem feuchten Schwamm oder dergleichen, erfolgen. Die Möglichkeiten, kapillarrheologische Messungen mit der erfindungsgemäßen Kombi-Rheometervorrichtung 1 durchzuführen, lassen sich somit beliebig erweitern.

In der Figur 3 ist für die Erfassung dieser weiteren Informationen eine optische Messeinrichtung 21 neben dem Behälter 20 dargestellt. Bei dieser optischen Messeinrichtung 21 kann es sich etwa um eine laserbasierte optische Messeinrichtung oder etwa um eine kamerabasierte optische Messeinrichtung handeln.

Auch ist vorstellbar, dass beide Formen parallel vorgesehen sind, wobei jegliche vorgesehene optische Messeinrichtungen 21 jeweils mit dem Steuermodul 8 der Kombi-Rheometervorrichtung 1 zu koppeln ist.

Der Behälter 20 kann in einer Ausführung der vorliegenden Erfindung beispielsweise einen Versuchsfensterbereich aufweisen, sodass die jeweilige Messeinrichtung 21 das innenliegende Probenmaterial der Probe 18 entsprechend erfassen kann, sodass die gewünschten Messungen mit der erfindungsgemäßen Kombi-Rheometervorrichtung 1 an dieser Stelle durchführbar sind.

Alternativ ist in einer weiteren Ausführung vorstellbar, dass der Behälter 20 gänzlich aus einem im Wesentlichen lichtdurchlässigen oder allgemein aus einem im Wesentlichen transparenten Material aufgebaut ist, sodass die gewünschten Messungen mit der erfindungsgemäßen Kombi-Rheometervorrichtung 1 an dieser Stelle durchführbar sind.

In Figur 3 ist dies mittels einer dargestellten dritten Verbindungsleitung 22 angedeutet, wobei diese dritte Verbindungsleitung 22 ausgelegt ist, mit einer nicht näher dargestellten Kopplungseinheit 6 der Kombi-Rheometervorrichtung 1 verbunden zu werden, sodass somit eine Koppelung zu dem ebenfalls in Figur 3 nicht näher dargestelltem Steuermodul 8 möglich ist.

Die jeweiligen optischen Messeinrichtungen 21 in ihren jeweiligen Ausführungsformen sind jeweils ausgelegt, eine austretende Probe 18 aus einem Teilbereich des zweiten Moduls 3 zu erfassen, sprich ein Verhalten, etwa eine Strangaufweitung, zu dokumentieren, sodass anschließend in dem Steuermodul 8 mit Steuerprogramm 9 eine entsprechende Aufbereitung dieser Informationen durchgeführt werden kann, um die durchgeführten kapillarrheologischen Messungen noch detaillierter auszuwerten.

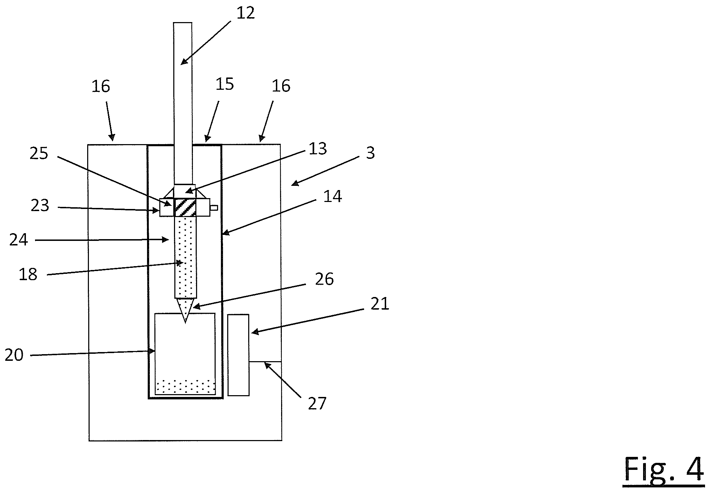

Fig. 4 zeigt eine schematische Detailansicht eines weiteren zweiten Moduls 3 für kapillarrheologische Messungen einer Kombi-Rheometervorrichtung 1 nach einem Ausführungsbeispiel der vorliegenden Erfindung.

In dieser Schnittansicht ist mittig ein Gefäß 14 dargestellt, welches nach oben hin (bezogen auf die Bildebene) eine Öffnung 15 aufweist, sodass es nach oben offen ist, wobei sich in dieser speziellen Ausführungsform diese Öffnung 15 im Wesentlichen in eine sie umgebende obere Begrenzungsfläche 16 des dargestellten zweiten Moduls 3 einfügt.

Das Gefäß 14 weist im Wesentlichen eine zylindrische Form auf. Bezogen auf die Bildebene ragt im oberen Drittel eine Verbindungseinheit 12 mit austauschbarer Stempeleinheit 13 von der Kombi-Rheometervorrichtung 1 in das Gefäß 14. Die austauschbare Stempeleinheit 13 weist dabei eine Einspannvorrichtung 23 auf. In der Einspannvorrichtung 23 ist ein Spritzgerät 24 eingespannt dargestellt, in welchem Probenmaterial von einer Probe 18 aufgezogen vorgesehen ist.

Dieses Spritzgerät 24 ist stark vereinfacht dargestellt und kann etwa in jeglicher Form einer handelsüblichen Injektionsspritze, beispielsweise in Form einer Insulinspritze, oder dergleichen vorgesehen sein. Ein Kolben 25 dieses Spritzgeräts 24 ist in der Einspannvorrichtung 23 eingespannt dargestellt, sodass bei einer vertikalen Bewegung der Verbindungseinheit 12 mit der austauschbaren Stempeleinheit 13 entsprechend dieser Kolben 25 nach unten gedrückt werden kann.

Somit kann folglich Probenmaterial der Probe 18 durch eine Injektionsnadel 26 des Spritzgeräts 24 ausgedrückt werden und kapillarrheologischen Messungen können somit durchgeführt werden.

Bei der Einspannvorrichtung 23 kann es sich beispielsweise um eine Einspannvorrichtung 23 mit einem einfachen Federmechanismus oder dergleichen handeln. Auch kann die Einspannvorrichtung 23 jegliche mechanisch einstellbare Spannelemente umfassen, sodass benutzerdefinierte Einstellvorgänge bewirkbar sind.

Dabei kann etwa vorgesehen sein, dass das Spritzgerät 24 derart umfasst beziehungsweise allgemein eingespannt wird, sodass der Kolben 25 des Spritzgeräts 24 benutzerdefiniert für die Zwecke von kapillarrheologischen Messungen nach unten gedrückt werden kann und gleichzeitig das Spritzgerät 24 ortsfest in dem Gefäß 14 gehalten wird. Mit anderen Worten ist die Einspannvorrichtung 23 in jeglichen Ausführungsformen ausgelegt, einen Endbereich eines Spritzgeräts 24 so einzuspannen, sodass mittels übertragener Bewegungsimpulse der Kolben 25 des Spritzgeräts 24 benutzerdefiniert bewegbar ist, sodass kapillarrheologische Messungen durchführbar sind.

Dabei kann das Spritzgerät 24 ortsfest in der Kombi-Rheometervorrichtung 1, insbesondere in dem Gefäß 14 des zweiten Moduls 3, ortsfest platziert werden, sodass die auf den Kolben 25 übertragenen Kräfte größtenteils für das Ausdrücken von Probenmaterial der Probe 18, welche in dem Spritzgerät 24 aufgezogen ist, aufgewendet werden.

Um Reibungen zu vermeiden, kann in einer Ausführungsvariante das Spritzgerät 24 entsprechende Beschichtungen zur Reibungsreduktion aufweisen. Es ist jedoch auch vorstellbar, dass handelsübliche Injektionsspritzen oder dergleichen mit bereits gefülltem Probematerial benutzerdefiniert in der Kombi-Rheometervorrichtung 1 wie beschrieben eingelegt werden, sodass anschließend kapillarrheologische Messungen durchführbar sind.

Unterhalb der Injektionsnadel 26 des Spritzgeräts 24 in Figur 4 ist ein Behälter 20 dargestellt, in welchem aus der Injektionsnadel 26 ausgetretenes Probenmaterial der Probe 18 aufgefangen werden kann, was im Bodenbereich des Behälters 20 angedeutet zu erkennen ist.

Dieser Behälter 20 ist dabei in sich geschlossen dargestellt, sodass er benutzerdefiniert mit einem Gasgemisch oder einer Flüssigkeit oder einem Festkörper, insbesondere einem Schwammkörper, mit aufgenommenem Gasgemisch oder einem Festkörper, insbesondere einem Schwammkörper, mit aufgenommener Flüssigkeit befüllbar ist.

Beispielsweise kann der Behälter 20 in einer einfachen Variante mit Raumluft gefüllt sein. Es ist jedoch vorstellbar, dass der Behälter 20 auch mit einem gesondert für diese Zwecke angemischtem Gasgemisch befüllt ist, welches sich vor allem dadurch auszeichnet, dass es sich überwiegend bezogen auf die Volumenanteile eben nicht um Raumluft handelt.

Die Geschlossenheit des Behälters 20 ist in Figur 4 angedeutet zu erkennen, da lediglich die Injektionsnadel 26 unmittelbar in einen Innenbereich des Behälters 20 hineinragt, wobei somit lediglich das Probenmaterial der Probe 18 in diesen Innenbereich von außen eindringen kann.

Insofern kann optional eine bestimmte Gaszusammensetzung vorgesehen sein, etwa um eine Grenzfläche Probe-Gas bei einem Austritt beziehungsweise Auslass der Probe 18 aus dem zweiten Modul 3 zu verändern und so zum Beispiel Grenzflächenspannungen zu reduzieren und somit vorrangig Bulk-Eigenschaften der Probe 18 zu untersuchen beziehungsweise weitere Messergebnisse für die Ermittlung von rheologischen Informationen zu erhalten.

Mit gleicher Motivation kann der Auslass optional in ein Volumen mit einer Flüssigkeit oder in ein mit Gas oder Flüssigkeit gefüllten Festkörper, wie einem feuchten Schwamm oder dergleichen, erfolgen. Die Möglichkeiten, kapillarrheologische Messungen mit der erfindungsgemäßen Kombi-Rheometervorrichtung 1 durchzuführen, lassen sich somit beliebig erweitern.

In der Figur 4 ist für die Erfassung dieser weiteren Informationen eine optische Messeinrichtung 21 neben dem Behälter 20 dargestellt. Bei dieser optischen Messeinrichtung 21 kann es sich etwa um eine laserbasierte optische Messeinrichtung oder etwa um eine kamerabasierte optische Messeinrichtung handeln. Auch ist vorstellbar, dass beide Formen parallel vorgesehen sind, wobei jegliche vorgesehenen optischen Messeinrichtungen 21 mit dem Steuermodul 8 der Kombi-Rheometervorrichtung 1 zu koppeln sind.

Der Behälter 20 kann in einer Ausführung der vorliegenden Erfindung beispielsweise einen Versuchsfensterbereich aufweisen, sodass die jeweilige Messeinrichtung 21 das innenliegende Probenmaterial der Probe 18 entsprechend erfassen kann, sodass die gewünschten Messungen mit der erfindungsgemäßen Kombi-Rheometervorrichtung 1 an dieser Stelle durchführbar sind.

Alternativ ist in einer weiteren Ausführung vorstellbar, dass der Behälter 20 gänzlich aus einem im Wesentlichen lichtdurchlässigen oder allgemein aus einem im Wesentlichen transparenten Material aufgebaut ist, sodass die gewünschten Messungen mit der erfindungsgemäßen Kombi-Rheometervorrichtung 1 an dieser Stelle durchführbar sind.

In Figur 4 ist eine vierte Verbindungsleitung 27 angedeutet dargestellt, wobei diese vierte Verbindungsleitung 27 ausgelegt ist, mit einer nicht näher dargestellten Kopplungseinheit 6 der Kombi-Rheometervorrichtung 1 verbunden zu werden, sodass somit eine Koppelung zu dem ebenfalls in Figur 4 nicht näher dargestelltem Steuermodul 8 möglich ist.

Die jeweiligen optischen Messeinrichtungen 21 in ihren jeweiligen Ausführungsformen sind dabei jeweils ausgelegt, eine austretende Probe 18 aus einem Teilbereich des zweiten Moduls 3 zu erfassen, sprich ein Verhalten, etwa einer Strangaufweitung, zu dokumentieren, sodass anschließend in dem Steuermodul 8 mit Steuerprogramm 9 eine entsprechende Aufbereitung dieser Informationen durchgeführt werden kann, um die durchgeführten kapillarrheologischen Messungen noch detaillierter auszuwerten.

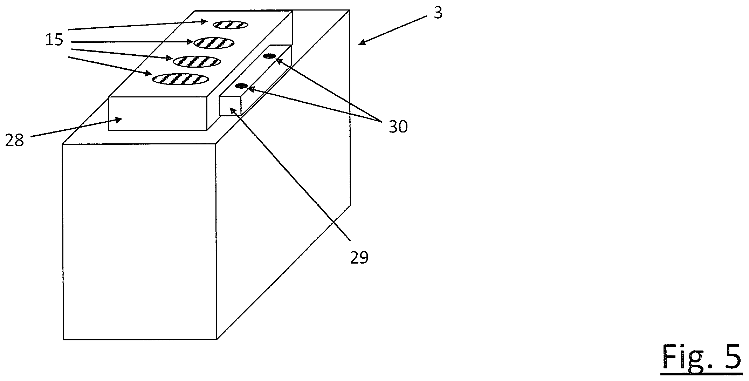

Fig. 5 zeigt eine schematische Perspektivansicht eines weiteren zweiten Moduls 3 für kapillarrheologische Messungen einer Kombi-Rheometervorrichtung 1 nach einem Ausführungsbeispiel der vorliegenden Erfindung.

In dieser Perspektivansicht ist dabei das zweite Modul 3 lediglich von außen dargestellt. Als gesonderte Baueinheit ragt oberhalb (bezogen auf die Bildebene) ein Multi-Gefäß-Modul 28 aus dem zweiten Modul 3 hervor. Anstelle nur eines Gefäßes 14, wie in den vorherigen Figuren 3 und 4 gezeigt, weist dieses dargestellte Multi-Gefäß-Modul 28 insgesamt vier Öffnungen 15 auf, in welchen sinngemäß vier Gefäße 14 mit entsprechenden Messvorrichtungen, wie etwa in den Figuren 3 und 4 beschrieben, vorgesehen sind.

Beispielsweise können also vier baugleiche Gefäße 14 mit entsprechenden Messvorrichtungen vorgesehen sein, sodass eine nicht näher dargestellte Verbindungseinheit 12 mit der austauschbaren Stempeleinheit 13 nacheinander in die jeweilige Öffnung 15 verfahrbar ist, sodass dann entsprechend die jeweiligen kapillarrheologische Messungen mittels der vorgestellten Kombi-Rheometervorrichtung 1 durchführbar sind. Auch ist vorstellbar, dass in jeder der Öffnungen 15 eine gesondert ausgeprägte kapillarrheologische Messapparatur vorgesehen ist, sodass beispielsweise unterschiedliche Varianten der in den Figuren 3 und 4 vorgestellten und beschriebenen Varianten vorgesehen sind, sodass dann entsprechend die jeweiligen kapillarrheologische Messungen mittels der vorgestellten Kombi-Rheometervorrichtung 1 durchführbar sind.

Seitlich des Multi-Gefäß-Moduls 28 ist eine Befestigungsvorrichtung 29 dargestellt, mittels welcher das Multi-Gefäß-Modul 28 befestigbar ist. Es kann beispielsweise vorgesehen sein, dass eine baugleiche Befestigungsvorrichtung 29 auf der hinteren, in dieser Perspektivansicht nicht einsehbaren Seite vorgesehen ist. Statt der zwei dargestellten Befestigungselemente 30 können auch drei oder mehr vorgesehen sein.

Die jeweils dargestellte längliche Rechteckform ist sowohl für das Multi-Gefäß-Modul 28 als auch für die Befestigungsvorrichtung 29 lediglich beispielhaft dargestellt.

So ist etwa in einer nicht näher dargestellten Ausführungsvariante vorstellbar, dass das Multi-Gefäß-Modul 28 eine im Wesentlichen runde Form, beispielsweise eine kreisförmige Form, aufweist, wobei dann die Öffnungen 15 in einer kreisförmigen Anordnung vorgesehen sind.

Auch können jeweils mehr als vier Öffnungen 15 mit entsprechend darunter angeordneten Gefäßen 14 mit entsprechenden Messvorrichtungen vorgesehen sein. Beispielsweise können etwa fünf oder acht Öffnungen 15 mit entsprechend darunter angeordneten Gefäßen 14 mit entsprechenden Messvorrichtungen vorgesehen sein. Auch können lediglich zwei Öffnungen 15 mit entsprechenden Gefäßen 14 mit entsprechenden Messvorrichtungen vorgesehen sein.

Dabei ist jeweils vorstellbar, dass das Multi-Gefäß-Modul 28 relativ beweglich zu der nicht näher dargestellten Verbindungseinheit 12 mit der austauschbaren Stempeleinheit 13 vorgesehen ist. So kann etwa die dargestellte längliche Rechteckform auf Schienen oder dergleichen vorgesehen sein, sodass dann eine jeweilige Öffnung 15 mit entsprechend darunter angeordneten Gefäßen 14 mit entsprechenden Messvorrichtungen jeweils so verfahrbar ist, sodass zum Zwecke der kapillarrheologischen Messungen dann eine im Wesentlichen vertikale (bezogen auf die Bildebene) Bewegung der Verbindungseinheit 12 mit der austauschbaren Stempeleinheit 13 durchführbar ist.

Anschließend wird diese Verbindungseinheit 12 mit der austauschbaren Stempeleinheit 13 wiederum vertikal nach oben bewegt, das Multi-Gefäß-Modul 28 wird um eine Position verschoben und es kann in der neu ausgerichteten Öffnung 15 eine weitere kapillarrheologische Messung durchgeführt werden.

In einer weiteren alternativen Ausführungsform ist vorstellbar, dass das Multi-Gefäß-Modul 28 starr vorgesehen ist und dann die Verbindungseinheit 12 mit der austauschbaren Stempeleinheit 13 mittels einer nicht näher dargestellten Antriebseinheit 11 waagrecht (bezogen auf die Bildebene) beziehungsweise allgemein in einer im Wesentlichen waagrechten Ebene, welche sich beispielsweise parallel zur jeweiligen Ebene der Öffnungen 15 erstreckt, bewegen lässt, sodass nacheinander in den jeweiligen Öffnungen 15 mit entsprechend darunter angeordneten Gefäßen 14 mit entsprechenden Messvorrichtungen die gewünschten kapillarrheologischen Messungen durchführbar sind.

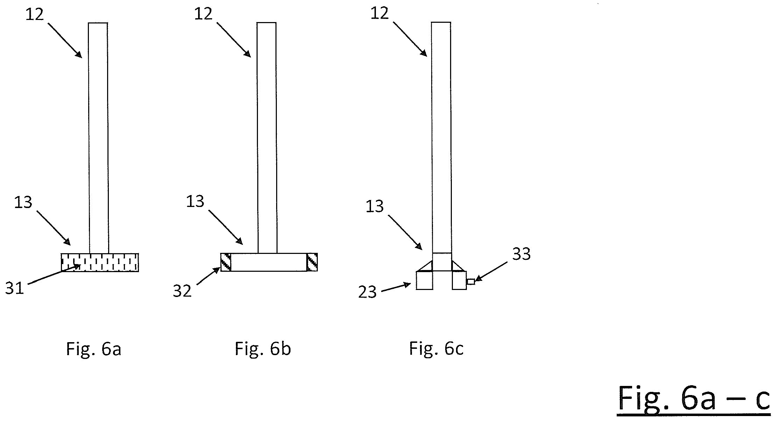

Fig. 6a - c zeigen schematische Detailansichten von Verbindungseinheiten 12 mit austauschbaren Stempeleinheiten 13 einer Kombi-Rheometervorrichtung 1 nach Ausführungsbeispielen der vorliegenden Erfindung.

Bezogen auf die Bildebene sind dabei von links nach rechts die Figuren 6a, 6b und 6c dargestellt, wobei jeweilige Verbindungseinheiten 12 gleich dargestellt sind und sich somit diese Figuren 6a - c lediglich in der austauschbaren Stempeleinheit 13 unterscheiden.

In Fig. 6a ist eine austauschbare Stempeleinheit 13 mit einer Beschichtung 31 dargestellt, wobei diese Beschichtung 31 zumindest an allen Seitenbereichen der austauschbaren Stempeleinheit 13 vorgesehen ist. Diese Beschichtung 31 kann beispielsweise die folgenden Materialien umfassen, welche ausgewählt sind aus: ... Es ist vorstellbar, dass entweder jedes der aufgelisteten Materialien jeweils allein als entsprechende Beschichtung 31 vorgesehen ist. Alternativ sind auch jegliche Mischungen von diesen aufgelisteten Materialien denkbar. So kann beispielsweise bei einer Mischung aus drei dieser Materialien ein jeweiliger Anteil von einem Drittel oder dergleichen vorgesehen sein.

In Fig. 6b ist eine austauschbare Stempeleinheit 13 mit einem Ringdichtungselement 32 dargestellt, wobei dieses Ringdichtungselement 32 die Stempeleinheit 13 außen passgenau umgibt. Es ist vorstellbar, dass dieses Ringdichtungselement 32 etwa anteilig aus einem elastischen Material besteht, sodass es passgenau auf die Stempeleinheit 13 übergestülpt oder allgemein positionierbar ist.

In einer weiteren Ausführung ist vorstellbar, dass dieses Ringdichtungselement 32 mittels gängiger Fügeverfahren an der Stempeleinheit 13 befestigbar ist, beispielsweise mittels klebender Elemente beziehungsweise Materialien oder auch mittels mechanischer Elemente. Stempeleinheiten 13 mit jeweils austauschbarem Ringdichtungselement 32 können helfen, jeweils auftretende Reibungen, welche während der Interaktion mit den jeweiligen Mitteln auftreten können, zu reduzieren, sodass mögliche störende Einflüsse dieser Reibungen bei Messvorgängen auf ein Minimum reduziert werden können.

In Fig. 6c ist eine austauschbare Stempeleinheit 13 mit einer Einspannvorrichtung 23 dargestellt. Diese Einspannvorrichtung 23 kann beispielsweise ausgelegt sein, ein nicht näher dargestelltes Spritzgerät 24, etwa eine Injektionsspritze oder dergleichen, einzuspannen. Beispielsweise kann dieses Spritzgeräts 24 in der Einspannvorrichtung 23 so eingespannt werden beziehungsweise derart eingespannt vorgesehen sein, sodass bei einer vertikalen Bewegung der Verbindungseinheit 12 mit der austauschbaren Stempeleinheit 13 entsprechend ein Kolben 25 dieses Spritzgeräts 24 nach unten gedrückt werden kann.

Dabei weist die Einspannvorrichtung 23 ein seitlich positioniertes Einstellelement 33 auf, sodass benutzerdefinierte Einspannvorgänge bewirkbar sind. So ist in einer Ausführung vorstellbar, dass das seitlich positionierte Einstellelement 33 mittels eines nicht näher dargestellten Federmechanismus vorgesehen ist. Auch ist vorstellbar, dass das seitlich positionierte Einstellelement 33 einen Schraubmechanismus umfasst, sodass entsprechend benutzerdefinierte Einspannvorgänge bewirkbar sind.

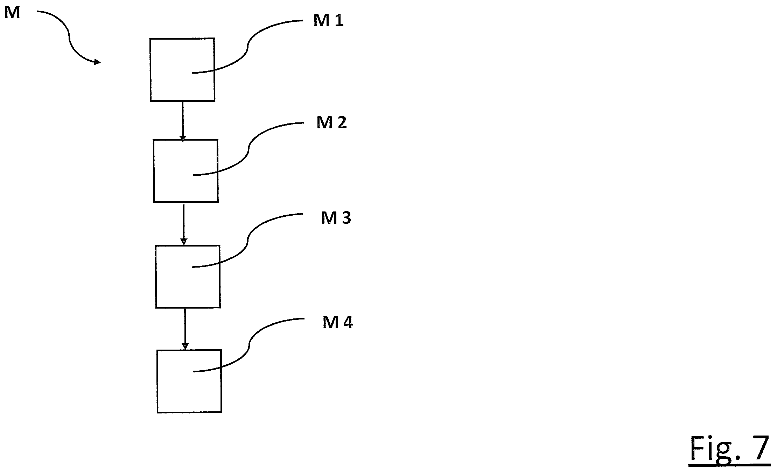

Fig. 7 zeigt ein schematisches Flussdiagramm von einem Verfahren M zur Kalibrierung einer Kombi-Rheometervorrichtung 1 nach einem Ausführungsbeispiel der vorliegenden Erfindung. In einem ersten Verfahrensschritt M1 wird eine erfindungsgemäße Kombi-Rheometervorrichtung 1 bereitgestellt und aktiviert. In einem zweiten Verfahrensschritt M2 werden rotationsrheometrische Messungen oder kapillarrheologische Messungen durchgeführt, wobei jeweils keine Probe eingelegt ist. In einem dritten Verfahrensschritt M3 werden Ergebnisse der Messungen ermittelt. In einem vierten Verfahrensschritt M4 werden die Ergebnisse der Messungen in dem Steuermodul 8 mit Steuerprogramm 9 hinterlegt, sodass diese Ergebnisse für nachfolgende Messungen mit Proben bereitstellbar sind.

In einer nicht näher dargestellten Ausführung dieses Verfahrens M ist vorstellbar, dass die folgenden weiteren Verfahrensschritte vorgesehen sind: Bereitstellen einer Probe, welche eine definierte Menge eines rheologisch bekannten Probenmaterial umfasst, Einlegen der Probe in die Kombi-Rheometervorrichtung 1, Ermittlung von Ergebnissen der Messungen, Hinterlegung der Ergebnisse der Messungen in dem Steuermodul 8 mit Steuerprogramm 9, sodass diese Ergebnisse für nachfolgende Messungen mit Proben bereitstellbar sind.

### BEZUGSZEICHENLISTE

- 1: Kombi-Rheometervorrichtung
- 2: erstes Modul
- 3: zweites Modul
- 4: Grundkörper
- 5: Platzhalter
- 6: Kopplungseinheit
- 7: erste Verbindungsleitung
- 8: Steuermodul
- 9: Steuerungsprogramm
- 10: zweite Verbindungsleitung
- 11: Antriebseinheit
- 12: Verbindungseinheit
- 13: Stempeleinheit
- 14: Gefäß
- 15: Öffnung
- 16: Begrenzungsfläche
- 17: Bodenplatte
- 18: Probe
- 19: Düsenvorrichtung
- 20: Behälter
- 21: optische Messeinrichtung
- 22: dritte Verbindungsleitung
- 23: Einspannvorrichtung
- 24: Spritzgerät
- 25: Kolben
- 26: Injektionsnadel
- 27: vierte Verbindungsleitung
- 28: Multi-Gefäß-Modul
- 29: Befestigungsvorrichtung
- 30: Befestigungselement
- 31: Beschichtung
- 32: Ringdichtungselement
- 33: Einstellelement

## Patentansprüche

1. Kombi-Rheometervorrichtung (1) zur Ermittlung von rheologischen Eigenschaften von Proben (18) umfassend erste Mittel zur Durchführung von rotationsrheometrischen Messungen, zweite Mittel zur Durchführung von kapillarrheologischen Messungen, eine gemeinsam genutzte Antriebseinheit (11) und ein gemeinsam genutztes Steuermodul (8) mit Steuerungsprogramm (9), welche jeweils sowohl für die ersten Mittel als auch für die zweiten Mittel zum Zwecke der jeweiligen Messungen benutzerdefiniert bereitstellbar und nutzbar sind.

2. Kombi-Rheometervorrichtung (1) nach Anspruch 1, wobei die ersten und zweiten Mittel jeweils anteilig Komponenten umfassen, welche in einem jeweiligen ersten Modul (2) für rotationsrheometrische Messungen und einem zweiten Modul (3) für kapillarrheologische Messungen vorgesehen sind, welche jeweils ausgelegt sind, in der Kombi-Rheometervorrichtung (1) platzierbar zu sein, wobei die Kombi-Rheometervorrichtung (1) ausgelegt ist, entweder das erste oder das zweite Modul (2, 3) reversibel aufzunehmen, sodass je nach platziertem ersten oder zweiten Modul (2, 3) rotationsrheometrische Messungen oder kapillarrheologische Messungen an Proben (18) durchführbar sind.

3. Kombi-Rheometervorrichtung (1) nach Anspruch 2, wobei die gemeinsam genutzte Antriebseinheit (11) und das gemeinsam genutzte Steuermodul (8) mit Steuerungsprogramm (9) jeweils fester Bestandteil der Kombi-Rheometervorrichtung (1) sind, sodass diese Komponenten funktional jeweils dem ersten oder dem zweiten platzierten Modul (2, 3) bereitstellbar sind.

4. Kombi-Rheometervorrichtung (1) nach einem der vorhergehenden Ansprüche, wobei die Antriebseinheit (11) eine Verbindungseinheit (12) mit einer austauschbaren Stempeleinheit (13) umfasst, welche ausgelegt ist, benutzerdefiniert Bewegungsimpulse der Antriebseinheit (11) an die jeweiligen ersten oder zweiten Mittel zu übertragen, sodass aufgrund der Übertragung von benutzerdefinierten Bewegungsimpulsen jeweilige rheologische Messungen durchführbar sind, wobei die Bewegungsimpulse ausgewählt sind aus: rotierende Bewegungsimpulse, vertikale Bewegungsimpulse, horizontale Bewegungsimpulse, rotierende und gleichzeitig vertikale Bewegungsimpulse.

5. Kombi-Rheometervorrichtung (1) nach einem der vorhergehenden Ansprüche, wobei die Kombi-Rheometervorrichtung (1) zumindest eine mit dem Steuermodul (8) gekoppelte Sensoreinrichtung umfasst, welche ausgelegt ist, benutzerdefiniert für die Durchführung von rotationsrheometrischen Messungen oder für die Durchführung von kapillarrheologischen Messungen bereitstellbar und nutzbar zu sein.

6. Kombi-Rheometervorrichtung (1) nach einem der vorhergehenden Ansprüche 4 bis 5, wobei die austauschbare Stempeleinheit (13) ausgewählt ist aus: Stempeleinheit (13), welche ausgelegt ist, für rotationsrheometrische Messungen nutzbar zu sein, Stempeleinheit (13), welche ausgelegt ist, für kapillarrheologische Messungen nutzbar zu sein, Stempeleinheit (13), welche ausgelegt ist, für rotationsrheometrische Messungen oder kapillarrheologische Messungen nutzbar zu sein, Stempeleinheit (13) mit austauschbarem Ringdichtungselement (32), welche ausgelegt ist, für kapillarrheologische Messungen nutzbar zu sein, Stempeleinheit (13) mit austauschbarem Ringdichtungselement (32), welche ausgelegt ist, für rotationsrheometrische Messungen oder kapillarrheologische Messungen nutzbar zu sein.

7. Kombi-Rheometervorrichtung (1) nach einem der vorhergehenden Ansprüche 4 bis 6, wobei die austauschbare Stempeleinheit (13) eine benutzerdefiniert einstellbare Einspannvorrichtung (23) umfasst, welche ausgelegt ist, einen Endbereich eines Spritzgeräts (24) einzuspannen, sodass mittels der übertragenen Bewegungsimpulse ein Kolben (25) des Spritzgeräts (24) benutzerdefiniert bewegbar ist, sodass kapillarrheologische Messungen durchführbar sind.

8. Kombi-Rheometervorrichtung (1) nach einem der vorhergehenden Ansprüche 2 bis 7, wobei das zweite Modul (3) für kapillarrheologische Messungen zumindest ein Gefäß (14) zur Aufnahme einer Probe (18) umfasst, wobei an einem Endbereich eines jeweiligen Gefäßes (14) zumindest eine austauschbare Düsenvorrichtung (19) platzierbar ist, sodass mittels der gemeinsam genutzten Antriebseinheit (11) eine in dem jeweiligen Gefäß (14) eingelegte Probe (18) zwecks kapillarrheologischen Messungen durch die zumindest eine Düsenvorrichtung (19) bewegbar ist.

9. Kombi-Rheometervorrichtung (1) nach einem der vorhergehenden Ansprüche 2 bis 8, wobei das zweite Modul (3) für kapillarrheologische Messungen zumindest ein Gefäß (14) umfasst und wobei jeweilige Innenwandungen des zumindest einen Gefäßes (14) mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

10. Kombi-Rheometervorrichtung (1) nach einem der vorhergehenden Ansprüche 2 bis 9, wobei das zweite Modul (3) für kapillarrheologische Messungen zumindest eine mit dem Steuermodul (8) gekoppelte optische Messeinrichtung (21) umfasst, welche ausgelegt ist, austretende Proben (18) aus einem Teilbereich des zweiten Moduls (8) zu erfassen, wobei die optische Messeinrichtung (21) ausgewählt ist aus: Laserbasierte optische Messeinrichtung, kamerabasierte optische Messeinrichtung.

11. Kombi-Rheometervorrichtung (1) nach einem der vorhergehenden Ansprüche 2 bis 10, wobei das zweite Modul (3) für kapillarrheologische Messungen einen Behälter (20) umfasst, welcher benutzerdefiniert mit einem Gasgemisch oder einer Flüssigkeit oder einem Festkörper, insbesondere einem Schwammkörper, mit aufgenommenem Gasgemisch oder einem Festkörper, insbesondere einem Schwammkörper, mit aufgenommener Flüssigkeit befüllt ist und welcher ausgelegt ist, austretende Proben (18) aufzunehmen.

12. Kombi-Rheometervorrichtung (1) nach Anspruch 8, wobei die zumindest eine Düsenvorrichtung (19) ausgewählt ist aus: Düsenvorrichtung (19) mit einer Öffnung mit einem Durchmesser von mindestens 10 µm; Düsenvorrichtung (19) mit einer Öffnung zwischen 0,01 und 2 mm; Injektionsnadel mit einem Innendurchmesser zwischen 0,01 und 2 mm; Injektionsnadel mit einem Innendurchmesser zwischen 0,01 und 2 mm und mit einer Länge zwischen 1 und 23 mm; Injektionsnadel mit einem Innendurchmesser zwischen 0,01 und 2 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften; Injektionsnadel mit einem Innendurchmesser von mindestens 10 µm, insbesondere zwischen 0,01 und 2 mm und mit einer Länge von mindestens 10 µm, insbesondere zwischen 1 und 23 mm, wobei Innenwandungen der Injektionsnadel zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

13. Kombi-Rheometervorrichtung (1) nach einem der vorhergehenden Ansprüche 5 bis 12, wobei die zumindest eine mit dem Steuermodul (8) gekoppelte Sensoreinrichtung ausgewählt ist aus: Sensoreinrichtung zur Messung von Kräften; Sensorvorrichtung zur Messung von Drücken; Sensorvorrichtung zur Messung von Kräften und zur Messung von Drücken.

14. Kombi-Rheometervorrichtung (1) nach einem der vorhergehenden Ansprüche 4, 6 oder 7, wobei die jeweiligen austauschbaren Stempeleinheiten (13) außen zumindest anteilig mit einem Beschichtungsmaterial beschichtet sind, wobei das Beschichtungsmaterial ausgewählt ist aus: Hydrophiles Beschichtungsmaterial, hydrophobes Beschichtungsmaterial, verschleißarmes Beschichtungsmaterial, Beschichtungsmaterial mit benutzerdefinierten Reibeigenschaften.

15. Kombi-Rheometervorrichtung (1) nach einem der vorhergehenden Ansprüche 4 bis 14, wobei die Kombi-Rheometervorrichtung (1) zumindest eine Reinigungsvorrichtung umfasst, welche ausgelegt ist, zumindest anteilig die Verbindungseinheit (12) mit der austauschbaren Stempeleinheit (13) zu reinigen.

16. Kombi-Rheometervorrichtung (1) nach einem der vorhergehenden Ansprüche, wobei das Steuermodul (8) mit Steuerprogramm (9) zumindest ein Kalibrierverfahren umfasst, sodass die Kombi-Rheometervorrichtung (1) vor den Messungen kalibrierbar ist, sodass anschließend rotationsrheometrische Messungen oder kapillarrheologische Messungen durchführbar sind.

17. Verfahren zur Kalibrierung einer Kombi-Rheometervorrichtung (1) gemäß einem der Ansprüche 1 bis 16 umfassend:
• Bereitstellen und Aktivieren einer Kombi-Rheometervorrichtung (1) gemäß einem der Ansprüche 1 bis 16;
• Durchführen von rotationsrheometrischen Messungen oder kapillarrheologischen Messungen, wobei jeweils keine Probe eingelegt ist;
• Ermittlung von Ergebnissen der Messungen;
• Hinterlegung der Ergebnisse der Messungen in dem Steuermodul (8) mit Steuerprogramm (9), sodass diese Ergebnisse für nachfolgende Messungen mit Proben (18) bereitstellbar sind.

18. Verfahren gemäß Anspruch 17, welches weiterhin umfasst:
• Bereitstellen einer Probe (18), welche eine definierte Menge eines rheologisch bekannten Probenmaterial umfasst;
• Einlegen der Probe (18) in die Kombi-Rheometervorrichtung (1);
• Ermittlung von Ergebnissen der Messungen;
• Hinterlegung der Ergebnisse der Messungen in dem Steuermodul (8) mit Steuerprogramm (9), sodass diese Ergebnisse für nachfolgende Messungen mit Proben (18) bereitstellbar sind.
